**Europäisches Patentamt**

**European Patent Office**

**Office européen des brevets**

(19)

(11) Veröffentlichungsnummer: **0 319 868 B1**

(12) **EUROPÄISCHE PATENTSCHRIFT**

(45) Veröffentlichungstag der Patentschrift: **03.03.93**

(51) Int. Cl.⁵: **C09K 7/02**

(21) Anmeldenummer: **88120201.4**

(22) Anmeldetag: **03.12.88**

(54) **Verwendung von Carboxymethylsulfoethylcellulose in Bohrspülungen.**

(30) Priorität: **11.12.87 DE 3742105**

(43) Veröffentlichungstag der Anmeldung:
**14.06.89 Patentblatt 89/24**

(45) Bekanntmachung des Hinweises auf die Patenterteilung:
**03.03.93 Patentblatt 93/09**

(84) Benannte Vertragsstaaten:
**DE FR GB**

(56) Entgegenhaltungen:
**US-A- 2 811 519**
**US-A- 4 110 226**
**US-A- 4 519 923**

(73) Patentinhaber: **Wolff Walsrode Aktiengesell-schaft**
**Postfach**
**W-3030 Walsrode 1(DE)**

(72) Erfinder: **Herzog, Dieter, Dr.**
**Hollige 19**
**W-3030 Walsrode(DE)**
Erfinder: **Schriewer, Bernd, Dr.**
**Holunderweg**
**W-3030 Walsrode(DE)**

(74) Vertreter: **Zobel, Manfred, Dr. et al**
**c/o BAYER AG Konzernverwaltung RP Patentabteilung Bayerwerk**
**W-5090 Leverkusen (DE)**

**Beschreibung**

Die Erfindung betrifft die Verwendung von Carboxymethyl und Sulfoethylgruppen-haltigen Cellulosederivaten (CMSEC) in Bohrspülungen.

In der Tiefbohrtechnik werden in wasserbasischen Bohrspülungen Polymere zur Viskositätseinstellung und zur Reduzierung des Wasserverlustes eingesetzt. Damit wird ein Abfließen der Bohrflüssigkeit in durchlässige Formationsbereiche während des Bohrvorgangs verhindert. Durch eine geeignete Rheologie der Bohrspülung wird ein optimales Austragen des erbohrten Gesteins aus dem Bohrloch erzielt.

Die verwendeten Polymere sollen Viskosität und Wasserbindung in Gegenwart von Elektrolyten, in erster Linie Alkali-und Erdalkalisalzen, unter den im Bohrloch herrschenden Temperaturbedingungen beibehalten.

Als gängige Produkte kommen hierbei Carboxymethylcellulosen (CMC), Stärkederivate sowie synthetische Polymere zum Einsatz (G.V. Chilingarian, P. Vorabutr: Developments in Petroleum Sci. 11, Elsevier Scientific Publishing Company, Amsterdam, 1981, Drilling and Drilling Fluids).

Synthetische Produkte auf der Basis von Acrylsäuren, Acrylamiden und ihren Copolymeren haben den großen Nachteil, daß sie nur über eine geringere Salzstabilität, speziell gegenüber mehrwertigen Ionen verfügen. Synthetische Polymere, die auch über eine hohe Stabilität gegenüber mehrwertigen Ionen, wie Kalzium und Magnesium, verfügen, sind sehr teuer, so daß ein Einsatz häufig aus ökonomischen Gründen nicht infrage kommt.

Die in PCT/EP 82/00264 und in EP-A 0 152 814 beschriebenen synthetischen Copolymerisate enthalten polymerisierte sulfonsäurehaltige Monomere, welche für die Stabilität gegenüber mehrwertigen Ionen eine entscheidende Rolle spielen, jedoch den Nachteil haben, daß sie sehr teuer sind.

Stärkederivate verfügen zwar über eine erhöhte Stabilität gegenüber mehrwertigen Ionen, wie Kalzium und Magnesium, haben jedoch eine geringere Temperaturstabilität. So ist bekannt, daß Stärke bzw. Stärkederivate in einem Temperaturbereich von 100 bis 120°C sehr stark an Wirksamkeit verlieren und damit unbrauchbar werden.

Die aus US-A-2 425 768 bekannten Carboxymethylcellulosen (CMC) verfügen in wasserbasischen Bohrspülungen über sehr gute Eigenschaften zur Reduzierung des Wasserverlustes, haben jedoch eine begrenzte Stabilität gegenüber mehrwertigen Ionen, wie Kalzium und Magnesium. Die Herstellung von reiner Sulfoethylcellulose (SEC) wurde in US-A-2 132 181 beschrieben. Die aus der US-A-4 519 923 bekannten Sulfoethylcellulosen haben den Nachteil, daß die reinen Sulfoethylcellulosen sehr teuer sind.

In SU 79 40 89 ist die Verwendung von Carboxymethylsulfoethylcellulose (CMSEC) als Viskositätsbildner für Textildruckfarben beschrieben. Es wird dort die Verwendung von Carboxymethyl-sulfoethylcellulosen mit einem $DS_{Carboxymethyl}$ von 0,4 bis 0,55 und einem $DS_{Sulfoethyl}$ von 0,1 bis 0,25 als Viskositätsbildner in Textildruckfarben beansprucht. Die aus der US-A-2 811 519 bekannten Carboxymethylsulfoethylcellulosen haben den Nachteil, daß sie in Bohrspülungen über schlechte Eigenschaften verfügen und damit ungeeignet sind.

Aufgabe der vorliegenden Erfindung war es, elektrolyt- und temperaturstabile Polymere für verbesserte Bohrspülungen zu entwickeln. Diese Polymere sollten auch in hochsalinaren Spülungssystemen in Gegenwart mehrwertiger Kationen und bei Temperaturen bis zu 160°C unter wirtschaftlichen Gesichtspunkten verwendbar sein.

Gegenstand der vorliegenden Erfindung ist die Verwendung von Carboxymethylsulfoethylcellulose (CMSEC) in wasserbasischen Bohrspülungen, dadurch gekennzeichnet, daß

1. Die durchschnittliche Substitution pro Glucoseeinheit mit einer Carboxymethylgruppe $DS_{CM}$ 0,4 bis 1,8 beträgt

2. die durchschnittliche Substitution pro Glucoseeinheit mit einer Sulfoethylgruppe $DS_{SE}$ 0,1 bis 1,0 beträgt

3. die Summe aus $DS_{CM}$ und $DS_{SE}$ mindestens 0,9 beträgt

4. die Viskosität in 2 gew.-%iger Lösung in destilliertem Wasser bei einer Schergeschwindigkeit von 2,5 $sec^{-1}$ und einer Temperatur von 20°C 5 bis $50 \times 10^3$ mPa.s beträgt und

5. daß sie in einem Konzentrationsbereich von 0.1 - 4% bezogen auf die in der Bohrspülung enthaltene Menge an Wasser verwendet werden.

Die Carboxymethylsulfoethylcellulose CMSEC weist eine durchschnittliche Substitution von Sulfoethyl $DS_{SE}$ von 0,1 bis 1,0, insbesondere von 0,1 bis 0,8 pro Glucoseeinheit und eine durchschnittliche Substitution an Carboxymethyl $DS_{CM}$ von 0,4 bis 1,8, insbesondere von 0,6 bis 1,0 auf. Die erfindungsgemäß zu verwendenden Verbindungen werden in wasserbasischen Bohrspülungen eingesetzt, insbesondere in einem Konzentrationsbereich von 0,1 bis 4 %, bevorzugt 0,5 bis 3 % bezogen auf die in der Bohrspülung vorhandene Menge an Wasser. Die erfindungsgemäß zu verwendenden Verbindungen werden in einer bevorzugten Ausführungsform hergestellt durch Veretherung von Cellulose in alkalischer Lösung mit wenigstens einer eine Sulfoethylgruppe übertragenen Verbindung SE und wenigstens einer eine Carboxymethylgruppe übertragenen Verbindungen CM, dadurch gekennzeichnet, daß

a) Cellulose, beispielsweise in Form von Zellstoff, suspendiert wird, insbesondere in einem sekundären oder tertiären Alkohol,

b) die Suspension zusammengegeben wird mit der Verbindung SE und/oder CM, vorzugsweise unter Erhalt von pH 0 bis 9,

c) anschließend, insbesondere durch Zugabe von Alkali, alkalisch gestellt wird, vorzugsweise auf pH 13 bis 14,

d) die Veretherung durchgeführt wird, insbesondere bei einer Temperatur zwischen 55 bis 100°C,

e) gegebenenfalls anschließend die Verbindung CM und/oder SE zugegeben wird, insbesondere bei Temperaturen von 15 bis 100°C und pH 10 bis 14 unter Bildung einer CMSEC.

In einer anderen bevorzugten Ausführungsform werden die erfindungsgemäßen Verbindungen hergestellt durch Veretherung von Carboxymethylcellulose CMC in alkalischer Lösung mit wenigstens einer eine Sulfoethylgruppe übertragenen Verbindung SE, dadurch gekennzeichnet, daß

a) CMC suspendiert wird, insbesondere in einem sekundären oder tertiären Alkohol,

b) die Suspension zusammengegeben wird mit der Verbindung SE, vorzugsweise unter Erhalt von pH 0 bis 9,

c) anschließend, insbesondere durch Zugabe von Alkali, alkalisch gestellt wird, vorzugsweise auf pH 13 bis 14,

d) die Veretherung durchgeführt wird, insbesondere bei einer Temperatur zwischen 55 bis 100°C, unter Bildung einer CMSEC.

Die erfindungsgemäß zu verwendenden Cellulosederivate besitzen im Vergleich zu CMC eine wesentlich verbesserte Stabilität gegenüber mehrwertigen Ionen, wie z.B. Kalzium und Magnesium. Die gute Temperaturstabilität der Carboxymethylcellulosen ist auch bei den erfindungsgemäßen Produkten vorhanden.

Die Viskosität der jeweils einzusetzenden erfindungsgemäß zu verwendenden Cellulosederivate richtet sich nach den Anforderungen des Spülungssystems. Zur Einstellung eines Wasserverlustes kleiner 10 ml (laut API-Norm) oder bei erhöhten Temperaturen (140 bis 160°C) werden niedrigviskose Cellulosederivate eingesetzt. Als niedrigviskose Cellulosederivate werden für die Zwecke der vorliegenden Erfindung diejenigen verstanden, die in 2 gew.-%iger wäßriger Lösung bei 20°C eine Viskosität von <1000 mPa.s bei einer Schergeschwindigkeit von 2,5 $sec^{-1}$ aufweisen. Die Konzentration derartiger Cellulosederivate beträgt vorzugsweise von 0,5 bis 4, insbesondere von 1 bis 3 Gew.-% bezogen auf die in der Bohrspülung vorhandene Menge an Wasser.

Hochviskose Celluloseether werden wegen der höheren Ergiebigkeit insbesondere bei geringerer Temperaturbelastung und für das Erreichen eines Wasserverlustes von <15 ml gemäß API-Norm eingesetzt. Als hochviskose Cellulosederivate werden für die Zwecke der vorliegenden Erfindung diejenigen verstanden, die in 2 gew.-%iger wäßriger Lösung bei 20°C und einer Schergeschwindigkeit von 2,5 $sec^{-1}$ eine Viskosität von >1000 mPa.s aufweisen. Derartige Verbindungen werden vorzugsweise eingesetzt in Mengen von 0,1 bis 2, insbesondere von 0,5 bis 1,5 bezogen auf die in der Bohrspülung vorhandene Menge an Wasser.

Die erfindungsgemäß verwendeten Cellulosederivate führen zu Bohrspülungen, die hervorragende Eigenschaften auch in Gegenwart von mehrwertigen Ionen (wie z.B. $Calcium^{2+}$, $Magnesium^{2+}$) bei erhöhten Temperaturen (140 bis 160°C) zeigen.

So kann der Einsatz der erfindungsgemäßen Produkte in allen wasserbasischen Flüssigkeiten erfolgen, die zum Abteufen und Behandeln von Bohrlöchern und Tiefbohrungen eingesetzt werden, insbesondere in Flüssigkeiten, die die Bohrlochstabilität während der Bohrlochbehandlung gewährleisten, sowie in Flüssigkeiten, die dazu dienen durch Einpressen unter hohem Druck die Fließwege für Erdöl und Erdgas zu verbessern (Fracen). Die Zusammensetzung dieser Flüssigkeiten kann dabei völlig anders sein als in den Beispielen angegeben.

Die erfindungsgemäß zu verwendenden Verbindungen können vorzugsweise nach dem Slurry-Verfahren hergestellt werden, wobei als Slurry-Medium z.B. verwendet werden können: primäre, sekundäre oder tertiäre Alkohole, wie Methanol, Ethanol, Isopropanol, Tertiärbutanol oder eine Mischung derselben. Auch andere mit Wasser mischbare organische Lösungsmittel, wie z.B. Aceton, können eingesetzt werden. Desgleichen können auch andere als der genannte Zellstoff eingesetzt werden. Die Viskositätshöhe der Produkte kann nach bekannten Verfahren durch Verringern oder Erhöhen der Temperatur oder durch Zusatz von Luft, $H_2O_2$ oder anderen oxidierenden Substanzen während oder vor der Alkalisierung nach Bedarf eingestellt werden. Desgleichen können bei der Herstellung die Reaktionszeit und Temperatur verändert werden. Die nach dem Waschen erhaltenen Produkte sind praktisch frei von niedermolekularen Verunreinigungen. Nach dem Trocknen an der Luft enthalten die Produkte noch einen Restgehalt an Feuchte.

Beispiele

Die Eigenschaften von Bohrspülungen werden nach den international anerkannten Normen des American Petroleum Institute gemessen und beurteilt (Standard Procedure for Testing Drilling Fluids, API RP 13 B, Sixth Edition, April 1976, issued by American Petroleum Institute, Production Department, 300 Carrigan Tower Building, Dallas, Texas 75201, USA).

Die genaue Zusammensetzung der Bohrspülung in Mischsalzsystemen unter Verwendung von niedrigviskosen erfindungsgemäßen Celluloseethern in der Tabelle als Additiv bezeichnet ist Tabelle 1a zu entnehmen. Die Bohrspülungen wurden einer Reihe von aufeinanderfolgenden Belastungen im Rollerofen ausgesetzt. Die Proben werden 15 Stunden bei Raumtemperatur, dann 15 Stunden bei 80°C und abschließend 15 Stunden bei 140°C gealtert. In Tabelle 1b sind die nach der abschließenden Alterung bei 140°C erhaltenen rheologischen Daten und der Wasserverlust dargestellt. Wie aus Tabelle 1b hervorgeht, zeigen die erfindungsgemäßen Beispiele sehr gute Werte für den Wasserverlust in dem verwendeten Spülungssystem nach der Alterung. Als Vergleichsbeispiel ist eine handelsübliche niedrigviskose Carboxymethylcellulose (CMC) in Tabelle 1b aufgeführt.

In Tabelle 2a ist die genaue Zusammensetzung der Bohrspülung bei Verwendung von hochviskosen Celluloseethern angegeben. Die Einsatzmengen an hochviskosen Celluloseethern (in der Tabelle als Additiv bezeichnet) beträgt 1 %. Die Proben wurden 15 Stunden bei Raumtemperatur und dann 15 Stunden bei 80°C gealtert. In der Tabelle 2b sind die Daten aufgeführt, die nach der Alterung bei 80°C gemessen wurden.

In der Tabelle 2b zeigen die Beispiele 12 und 13 gegenüber einer dem Stand der Technik repräsentierenden, handelsüblichen, hochviskosen CMC deutlich geringere Wasserverluste bei guten rheologischen Eigenschaften.

Die in Tabelle 1a und 2a angegebenen Bestandteile der Bohrspülungen, Bentonit und Salt water drilling clay (SWDC) entsprechen den Qualitätsanforderungen der Oil Companies Material Association (OCMA) von Oktober 1973. Eingesetzt wurde SWDC laut OCMA DFCP 1 und Bentonit laut OCMA DFCP 4.

Beispiel 1

127,4 Teile fein gemahlener (0,02 bis 0,5 mm) gebleichter, veredelter Fichtensulfitzellstoff werden in einem thermostatisierbaren Reaktor mit geeignetem Rührer unter Luftatmosphäre in 2.187 Teilen Isopropanol suspendiert und mit 79,67 Teilen einer 51,3 %igen vinylsulfonsauren Natriumsalz-Lösung in Wasser versetzt und 15 Minuten gerührt. Dann werden 75,46 Teile Natriumhydroxid gelöst in 106,7 Teilen Wasser zugegeben, und es wird 80 Minuten bei 25 bis 30°C alkalisiert. Dann erwärmt man innerhalb von 60 Minuten auf 70°C. Die Reaktionstemperatur von 70°C wird 120 Minuten lang gehalten (Reaktionszeit I). Anschließend gibt man 110,81 Teile einer 80 gew.-%igen Lösung Chloressigsäure in Wasser zu und hält die Temperatur für weitere 90 Minuten auf 70°C (Reaktionszeit II). Danach wird das Produkt abfiltriert und fünfmal mit je 2,000 Teilen einer Mischung aus 3 Anteilen Wasser und 7 Anteilen Methanol und abschließend einmal mit 2.000 Teilen reinem Methanol gewaschen. Das Produkt wird 18 Stunden an der Luft getrocknet und gemahlen. Das Produkt hat die folgenden Daten:

| | |
|---|---|
| Trockengehalt | = 83,7 % |
| $DS_{Sulfoethyl}$ | = 0,287 |
| $DS_{Carboxymethyl}$ | = 0,766 |
| Viskosität einer 2 %igen Lösung in dest. $H_2O$ | = 77 mPa•s |

Beispiele 2 bis 13

Tabelle 3 gibt die Herstellungsbedingungen der Beispiele 1 bis 13 an. Die Beispiele 2-13 wurden analog zu Beispiel 1 hergestellt. Dabei wurde in einigen Beispielen ein Teil des Isopropanols durch Methanol ersetzt.

4

Bei den Beispielen 2 bis 9 wurde die Zugabe der vinylsulfonsauren Natriumsalz-Lösung sowie die Zugabe des Natriumhydroxids vom zeitlichen Ablauf und der Temperaturführung analog zu Beispiel 1 durchgeführt.

Beispiele 12 bis 13

Die Beispiele 12 und 13 wurden analog Beispiel 1 durchgeführt. Dabei wurde der Fichtensulfitzellstoff durch Baumwoll-Linters ersetzt.

Die Stoffdaten der in den Beispielen genannten Cellulosederivate sind in Tabelle 4 enthalten.

## Tabelle 1

## Verhalten von niedrigviskosen Cellulosederivaten in hochsalinaren Bohrspülungen (lt. API[1])

**Tabelle 1a** Zusammensetzung der Bohrspülung:

$$
\begin{array}{ll}
2\ \% & \text{Bentonit (laut OCMA[2] DFCP 4)} \\
2\ \% & \text{Salt Water Drilling Clay} \\
& \text{(laut OCMA DFCP1)} \\
3\ \% & \text{Additiv (siehe unten)} \\
170\ g/l & NaCl \\
14\ g/l & KCl \\
100\ g/l & CaCl_2 \cdot 2\ H_2O \\
10\ g/l & MgCl_2 \cdot 6\ H_2O \\
3\ g/l & NaOH
\end{array}
$$

[1] API = American Petroleum Institute, Standard Procedure for Testing Drilling Fluids, API RP 13 B, April 1976

[2] OCMA = Oil Companies Material Association Spezifikationen herausgegeben durch The Institut of Petroleum London. Erschienen bei Heyden & Son London, 1978.

5

In Tabelle 1b zeigen die Beispiele 1 bis 8 erfindungsgemäße Produkte, die einen sehr geringen Wasserverlust aufweisen. Als Vergleich sind dort eine handelsübliche CMC und drei nicht erfindungsgemäße CMSEC aufgeführt. Der Wasserverlust gemäß API, beträgt für die CMC 60 ml und für die Gegenbeispiele 9, 10 und 11 Werte von 14 ml, 13 ml und 16,5 ml. Die Wasserverluste sind also deutlich größer als 10 ml.

Tabelle 1b  Spülungswerte nach 15stündigem Altern bei 140°C im Rollerofen

| Additiv, Beispiel Nr. | CMC | 1 | 2 | 3 | 4 | 5 | 6 | 7 | 8 | 9* | 10* | 11* |
|---|---|---|---|---|---|---|---|---|---|---|---|---|
| Scheinbare Viskosität mPa's (Apparent viscosity) | 25,5 | 14,5 | 23 | 13 | 15 | 17,5 | 27 | 17,5 | 21,5 | 14,5 | 12,0 | 15,5 |
| Plastische Viskosität mPa's (Plastic viscosity) | 15 | 12 | 21 | 12 | 13 | 16 | 21 | 14 | 18 | 11 | 11,0 | 13,0 |
| Fließgrenze 1b/100 ft² (Yield point) | 21 | 5 | 4 | 2 | 4 | 3 | 12 | 7 | 7 | 7 | 2 | 5 |
| Wasserverlust gemäß API ml (Fluid loss) | 60 | 6,4 | 3,6 | 4,4 | 4,9 | 2,5 | 3,2 | 5,1 | 3,2 | 14 | 13 | 16,5 |

1) API = American Petroleum Institute, Standard Procedure for Testing Drillings Fluids, API RP 13 B, April 1976

2) OCMA = Oil Companies Materials Association
   Spezifikationen herausgegeben durch The Institut of Petroleum London. Erschienen bei Heyden & Sons, London 1978

*) Vergleichsbeispiele

Tabelle 2

Verhalten von hochviskosen Cellulosederivaten in hochsalinaren Bohrspülungen (lt. API[1])

Tabelle 2a   Zusammensetzung der Bohrspülung:

|  |  |
|---|---|
| 2 % | Bentonit (laut OCMA[2] DFCP 4) |
| 2 % | Salt Water Drilling Clay |
| 1 % | Additiv (siehe unten) |
| 170 g/l | NaCl |
| 14 g/l | KCl |
| 100 g/l | $CaCl_2 \cdot 2\ H_2O$ |
| 10 g/l | $MgCl_2 \cdot 6\ H_2O$ |
| 3 g/l | NaOH |

[1] API = American Petroleum Institute, Standard Procedure for Testing Drilling Fluids, API RP 13 B, April 1976

[2] OCMA = Oil Companies Material Association Spezifikationen herausgegeben durch The Institut of Petroleum London. Erschienen bei Heyden & Son London, 1978.

7

Tabelle 2b  Spülungswerte nach 15stündigem Altern bei 80°C im Rollerofen

| Additiv, Beispiel Nr. | | CMC | 12 | 13 |
|---|---|---|---|---|
| Scheinbare Viskosität (Apparent viscosity) | mPa's | 54,5 | 36 | 36 |
| Plastische Viskosität (Plastic viscosity) | mPa's | 20 | 20 | 25 |
| Fließgrenze (Yield point) | 1b/100 ft$^2$ | 69 | 32 | 22 |
| Wasserverlust gemäß API (Fluid loss) | ml | 63 | 14 | 13 |

EP 0 319 868 B1

Tabelle 3  Herstelldaten der Celluloseether

| Bei-spiel Nr. | iPrOH [Teile] | MeOH [Teile] | Zell-stoff [Teile] | VSSNa-Lsg. [Teile] | Konz. der VSSNa-Lsg [Gew.-%] | NaOH [Teile] | H$_2$O [Teile] | 80 gew.-%ige CES-Lsg. [Teile] | Auf-heiz-zeit [min] | Reak-tions-zeit I [min] | Reak-tions-zeit II [min] | Reak-tions-tempe-ratur [°C] | Atmo-sphäre |
|---|---|---|---|---|---|---|---|---|---|---|---|---|---|
| 1 | 2.178 | - | 127,41 | 79,67 | 51,3 | 75,46 | 186,2 | 110,81 | 60 | 120 | 90 | 70 | Luft |
| 2 | 2.178 | - | 127,41 | 278,85 | 51,3 | 75,46 | 135,8 | 92,34 | 60 | 120 | 90 | 70 | Luft |
| 3 | 2.178 | - | 127,41 | 159,34 | 51,3 | 75,46 | 147,4 | 110,81 | 60 | 120 | 90 | 70 | Luft |
| 4 | 2.178 | - | 127,41 | 278,85 | 51,3 | 75,46 | 89,2 | 92,34 | 60 | 120 | 90 | 70 | N2 |
| 5 | 2.178 | - | 127,41 | 159,34 | 51,3 | 75,46 | 147,4 | 110,81 | 60 | 120 | 90 | 70 | N2 |
| 6 | 2.178 | - | 127,41 | 79,67 | 51,3 | 75,46 | 186,2 | 110,81 | 60 | 120 | 90 | 70 | N2 |
| 7 | 2.143 | 47,71 | 127,41 | 101,16 | 30,3 | 62,88 | 113,6 | 92,3 | 30 | 30 | 90 | 70 | N2 |
| 8 | 2.143 | 47,71 | 127,41 | 101,16 | 30,3 | 59,74 | 113,6 | 87,67 | 30 | 30 | 90 | 70 | N2 |
| 9* | 2.143 | 47,54 | 127,41 | 40,5 | 30,3 | 56,6 | 189,7 | 83,1 | 60 | 60 | 60 | 70 | N2 |
| 10* | 2.133 | 47,54 | 127,33 | 101,16 | 30,3 | 62,88 | 146,6 | 73,82 | 60 | 80 | 80 | 70 | N2 |
| 11* | 2.133 | 47,54 | 127,33 | 67,44 | 30,3 | 62,88 | 170,1 | 83,1 | 60 | 80 | 80 | 70 | N2 |
| 12 | 2.178 | - | 127,33 | 134,89 | 30,3 | 75,46 | 123,7 | 92,28 | 60 | 60 | 60 | 70 | N2 |
| 13 | 2.178 | - | 127,33 | 202,34 | 30,3 | 75,46 | 76,7 | 101,51 | 60 | 60 | 60 | 70 | N2 |

Tabelle 4    Produktdaten der Celluloseether

| Beispiel Nr. | Trocken-gehalt [%] | Viskosität 2 %ig in dest. H₂O [mPa·s] | DS Sulfoethyl | DS Carboxymethyl | DS Gesamt |
|---|---|---|---|---|---|
| 1 | 83,7 | 77 | 0,31 | 0,81 | 1,12 |
| 2 | 83,6 | 45 | 0,54 | 0,64 | 1,18 |
| 3 | 83,3 | 59 | 0,53 | 0,74 | 1,27 |
| 4 | 80,3 | 127 | 0,8 | 0,48 | 1,28 |
| 5 | 82,8 | 148 | 0,48 | 0,79 | 1,27 |
| 6 | 80,1 | 175 | 0,26 | 0,86 | 1,18 |
| 7 | 80,2 | 338 | 0,16 | 0,81 | 0,97 |
| 8 | 81,3 | 350 | 0,16 | 0,77 | 0,93 |
| 9* | 87,8 | 411 | 0,02 | 0,7 | 0,72 |
| 10* | 86,6 | 789 | 0,15 | 0,64 | 0,79 |
| 11* | 85,5 | 445 | 0,09 | 0,71 | 0,8 |
| 12 | 84,11 | 39,058 | 0,24 | 0,72 | 0,96 |
| 13 | 85,36 | 31,677 | 0,34 | 0,74 | 1,18 |

*) Vergleichsbeispiele

**Patentansprüche**

1. Verwendung von Carboxymethylsulfoethylcellulose (CMSEC) in wasserbasischen Bohrspülungen, dadurch gekennzeichnet, daß

10

a) die durchschnittliche Substitution pro Glucoseeinheit mit einer Carboxymethylgruppe $DS_{CM}$ 0,4 bis 1,8 beträgt

b) die durchschnittliche Substitution pro Glucoseeinheit mit einer Sulfoethylgruppe $DS_{SE}$ 0,1 bis 1,0 beträgt

c) die Summe aus $DS_{CM}$ und $DS_{SE}$ mindestens 0,9 beträgt

d) die Viskosität in 2 gew.-%iger Lösung in destilliertem Wasser bei einer Schergeschwindigkeit von 2,5 sec$^{-1}$ und einer Temperatur von 20°C 5 bis 50 x 10$^3$ mPa•s beträgt.

e) daß sie in einem Konzentrationsbereich von 0,1 bis 4 %, bezogen auf die in der Bohrspülung enthaltene Menge an Wasser verwendet werden.

2.  Verwendung nach Anspruch 1, dadurch gekennzeichnet, daß die CMSEC eine Viskosität von <1000 mPa•s aufweisen und in einer Menge von 0,5 bis 4 % bezogen auf die in der Bohrspülung enthaltene Menge an Wasser verwendet werden.

3.  Verwendung nach Anspruch 1, dadurch gekennzeichnet, daß die CMSEC eine Viskosität von >1000 mPa•s aufweisen und in einer Menge von 0,1 bis 2 % bezogen auf die in der Bohrspülung enthaltene Menge an Wasser verwendet werden.

**Claims**

1.  The use of carboxymethylsulphoethylcellulose (CMSEC) in water-based drilling fluids, characterized in that

a) the average substitution per glucose unit with a carboxymethyl group $DS_{CM}$ is 0.4 to 1.8,

b) the average substitution per glucose unit with a sulphoethylgroup $DS_{SE}$ is 0.1 to 1.0,

c) the sum of $DS_{CM}$ and $DS_{SE}$ is at least 0.9

d) the viscosity in 2 wt% solution in distilled water at a shear rate of 2.5 sec$^{-1}$ and a temperature of 20 °C is 5 to 50 x 10$^3$ mPa.s and

e) it is used in a concentration range of 0.1 to 4 % relative to the amount of water contained in the drilling fluid.

2.  The use according to Claim 1, characterized in that the CMSEC have a viscosity of <1000 mPa.s and are used in an amount of 0.5 to 4 % relative to the amount of water contained in the drilling fluid.

3.  The use according to Claim 1, characterized in that the CMSEC have a viscosity of >1000 mPa.s and are used in an amount of 0.1 to 2 % relative to the amount of water contained in the drilling fluid.

**Revendications**

1.  Utilisation de carboxyméthylsulfoéthylcelluloses (CMSEC) dans des fluides de forage à base aqueuse, utilisation caractérisée en ce que :

a) le degré moyen, par motif glucose, de substitution par un groupe carboxyméthyle, $DS_{CM}$ vaut 0,4 à 1,8,

b) le degré moyen, par unité ou motif de glucose, de substitution par un groupe sulfoéthyle $DS_{SE}$ vaut 0,1 à 1,0,

c) la somme des degrés $DS_{CM}$ et $DS_{SE}$ de substitution vaut au moins 0,9,

d) la viscosité, dans le cas d'une solution à 2 % en poids dans de l'eau distillée, à une vitesse de cisaillement de 2,5 s$^{-1}$ et à une température de 20°C, vaut 5 à 50 x 10$^3$ mPa.s.

e) et en ce qu'on les utilise en un domaine de concentration de 0,1 à 4 %, par rapport à la quantité d'eau contenue dans le fluide de forage.

2.  Utilisation selon la revendication 1, caractérisée en ce que les CMSEC présentent une viscosité inférieure à 1 000 mPa.s. et sont utilisés en une quantité de 0,5 à 4 %, par rapport à l'eau contenue dans le fluide de forage.

3.  Utilisation selon la revendication 1, caractérisée en ce que les CMSEC présentent une viscosité supérieure à 1 000 mPa.s. et sont utilisées en une quantité de 0,1 à 2 %, par rapport à la quantité d'eau contenue dans le fluide de forage.